# EUROPÄISCHE PATENTSCHRIFT

(11) **EP 1 761 379 B1**
(45) Veröffentlichungstag und Bekanntmachung des Hinweises auf die Patenterteilung: **05.03.2008**
(21) Anmeldenummer: 05747875.2
(22) Anmeldetag: 13.05.2005
(51) Int. Cl.: B29D 29/00, F16G 1/12

(54) **MIT FESTIGKEITSTRÄGERN VERSEHENER FLACHRIEMEN FÜR AUFZUGSANLAGEN**
FLAT BELT FOR ELEVATOR SYSTEMS, COMPRISING REINFORCEMENTS
COURROIE PLATE POURVUE DE SUPPORT DE MAINTIEN POUR DES INSTALLATIONS DE LEVAGE

(30) Priorität: 25.06.2004 DE 102004030722
(43) Veröffentlichungstag der Anmeldung: 14.03.2007
(73) Patentinhaber: ContiTech Antriebssysteme GmbH, 30165 Hannover (DE)
(72) Erfinder: GÖSER, Hubert, 29451 Dannenberg (DE)
(74) Vertreter: Finger, Karsten
(86) Internationale Anmeldenummer: PCT/EP2005/052210
(87) Internationale Veröffentlichungsnummer: WO 2006/000500

(56) Entgegenhaltungen:
- EP-A- 1 353 087
- DE-A1- 2 920 916
- DE-A1- 3 328 474
- DE-A1- 10 222 015
- US-A- 3 103 703
- US-A1- 2003 017 900

## Beschreibung

Die Erfindung betrifft einen Flachriemen, gemäß dem Oberbegriff des Anspruchs 1, ein Verfahren zur Herstellung eines solchen Flachriemens, gemäß dem Oberbegriff des Anspruchs 6, und eine Vorrichtung zur Durchführung des Herstellungsverfahrens, gemäß dem Oberbegriff des Anspruchs 7.

Die gattungsgemäßen Flachriemen bestehen aus elastomerem Material, in das Zugträger in Form von Stahl- oder Kunststoff-Corden integriert sind.

Bei der Fertigung derartiger Flachriemen ist man bestrebt, die Corde in einer einzigen, der biegeneutralen Ebene zu positionieren.
(1) Zur exakten Positionierung der Corde hat sich das sogenannte "Wickelnasen"-Verfahren als besonders geeignet erwiesen. Dabei wird das zur Herstellung verwendete Formrad mit (Quer-)Rippen, sogenannten "Nasen" versehen. Der obere Rand dieser Rippen legt die Ebene der Corde fest. Die Rippen ("Nasen") erzeugen hierzu kongruente Nuten in der Riemenoberfläche. Die "Wickelnasen"-Technik ist z. B. von der Zahnriemen-Herstellung her kannt (siehe z. B. AS 2123 902 und DE 29 20 916 C2).
   Auch im Bereich der Aufzugstechnik ergibt sich bei derartigen, mit Hilfe von "Wickelnasen"-Formrädern hergestellten Riemen eine exakte Positionierung der Zugträger (siehe z. B. DE 2512 530 A1).
   Durch die Verwendung von Wickelnasen-Formrädern für Flachriemen in der Aufzugstechnik haben sich aber andere Nachteile eingeschlichen: Dies sind die mit der Nutenfrequenz gegebene Geräuschentwicklung und die erhöhte Biegebeanspruchung im Bereich der Nuten.
(2) Zur Minderung der mit der Nutenfrequenz gegebenen Belästigung werden Flachriemen mit "geräuschreduzierter" Rillen-Anordnung vorgeschlagen. Die in den Schriften EP 02 008 371.3 - 2424 und PCT/US 03/03745 beschriebenen Rillen (Nuten) sind nicht rechtwinklig sondern vorzugsweise schräg ausgerichtet. Sie können geradlinig, gebogen, V- oder zickzackförmig ausgebildet sein. Außerdem können sie unterschiedlich voneinander beabstandet sein.
   Da in Aufzugsanlagen einzubauende Flachriemen während des Umlaufs über diverse Scheiben in beide Richtungen umgelenkt werden, sollte die Ebene der Festigkeitsträger mittig im Riemen angeordnet sein.
   Aber auch wenn die hier beschriebenen Zugträger mittig innerhalb der Riemen angeordnet sind, ergibt sich bereits wegen der Nuten eine beidseitig unterschiedliche Biegecharakteristik mit erhöhter Biegebeanspruchung im Bereich dieser Nuten.
(3) Zur Beseitigung dieses Missstandes schlägt die DE 102 22 015.8 ein Zwei-Stufen-Verfahren zur Herstellung von mit Festigkeitsträgern versehenen Flachriemen vor.
   Bei diesen Riemen liegt ebenfalls eine ebene Positionierung der Zugträger parallel zur Lauffläche vor. Dadurch, dass hier keine durch Wickelnasen erzeugten Nuten vorhanden sind, ist durch die gleichmäßigere Spannungsverteilung mit einer höheren Lebensdauer zu rechnen.
   Darüber hinaus zeichnet sich dieser Aufzugsgurt durch eine sehr hohe Cord-Dichte aus. Bei dem Semiprodukt liegt ca. die Hälfte des Zugträgerquerschnitts frei. Die PU-Oberfläche an dieser Riemenseite ist also relativ gering.
   An diese Seite muss aber im zweiten Prozessschritt die zweite Riemenhälfte angebunden werden. Das PU der zweiten Riemenhälfte muss dabei mit dem PU der ersten Riemenhälfte verschweißen.
   Der mit der relativ geringen PU-Oberfläche an der zu verschweißenden Riemenseite gegebene Nachteil dieses im Zwei-Stufen-Verfahren hergestellten Riemens liegt in einer theoretischen Lagentrennung. Dabei würde sich die im zweiten Schritt aufgebrachte Riemenhälfte wieder ablösen, und die Zugträger könnten direkt mit der Antriebsscheibe in Kontakt kommen. Ferner hat dieses Verfahren den Nachteil, dass die Anbindung des Riemenmaterials an die Zugträger nicht optimal ist.

### Aufgabe der Erfindung

Die Aufgabe der Erfindung besteht darin, den gemäß der DE 102 22 015.8 hergestellten Riemen und das Verfahren zu seiner Herstellung derartig weiterzubilden, dass eine theoretisch zu befürchtende Lagentrennung zuverlässig vermieden und dass die Anbindung des Riemenmaterials an die Zugträger optimiert wird.

### Lösung und Vorteile der Erfindung

Gemäß Anspruch 1 ist der erste Teilriemen mit Nuten versehen, die durch das plastifizierbare Material des zweiten Teilriemens aufgefüllt werden. Auf diese Weise ergibt sich eine zuverlässige Verzahnung der beiden Teilriemen miteinander und eine gute Bindung zwischen Zugträger und Elastomermaterial.

Bei der vorgeschlagenen neuen Lösung hat das Semiprodukt eine maximale PU-Anschweißfläche. Ferner besteht durch die verfüllten Wickelnäsen auch noch eine mechanische Verbindung, die gegen Scherkräfte wirkt.

Zur exakt ebenen Positionierung der in den ersten Teilriemen zu integrierenden Zugträger weist das Formrad der Vorrichtung gemäß Anspruch 7 auf seinem Umfang sogenannte "Wickelnasen" auf, die unterschiedlich geformt und unterschiedlich zueinander angeordnet sein können. Diese auf der Formrad-Umfangsfläche angeordneten "Wickelnasen" sind so dimensioniert, dass die Zugträgerlage mittig im fertigen Flachriemen positioniert sind. Auf diese Weise ist eine beidseitig gleichartige Umlenkcharakteristik des Riemens gewährleistet. D. h.: Gute Zugfrägerpositionierung und gute Verteilung der Biegespannung.

Im Unterschied zu dem in der EP 02 008 371.3 - 2424 beschriebenen Verfahren werden gemäß Anspruch 6 die auf der Riemenoberfläche befindlichen Nuten in einer weiteren Verfahrensstufe verfüllt, so dass letztendlich eine nutenfreie Riemenoberfläche entsteht. Zusätzlich wird durch das vollständige Umfließen der Drähte im ersten Prozessschritt eine bessere Penetration des PU's in den Draht und somit eine bessere Anbindung erreicht.

Für spezielle Anwendungen kann es wünschenswert sein, die beiden Teilriemen aus unterschiedlichen Elastomermaterialien herzustellen. Dies ist wegen des zweistufigen Herstellungsverfahrens problemlos möglich.

Auch ist es ohne großen zusätzlichen Aufwand möglich, eine oder beide Oberflächen mit einer Profilierung und/oder einer Beschichtung zu versehen.

Durch das an Formen gebundene Verfahren lässt sich die Oberflächenstruktur einfach beeinflussen. Insbesondere die zweite Schicht kann mit Längs- oder Querprofilen ausgeführt sein.

Außer in der Aufzugstechnik ist der erfindungsgemäße Riemen auch für sonstige Flachriemenanordnungen einsetzbar.

### Zeichnungen

Ein Ausführungsbeispiel der erfindungsgemäßen Vorrichtung und deren Wirkungsweise und ein Ausführungsbeispiel des erfindungsgemäßen Flachriemens wird anhand der beigefügten Zeichnungen näher erläutert. Es zeigt:
Fig. 1 den Prinzipaufbau einer Vorrichtung und
Fig. 2 den Längsschnitt durch einen mit der Vorrichtung hergestellten Riemen.

### Beschreibung

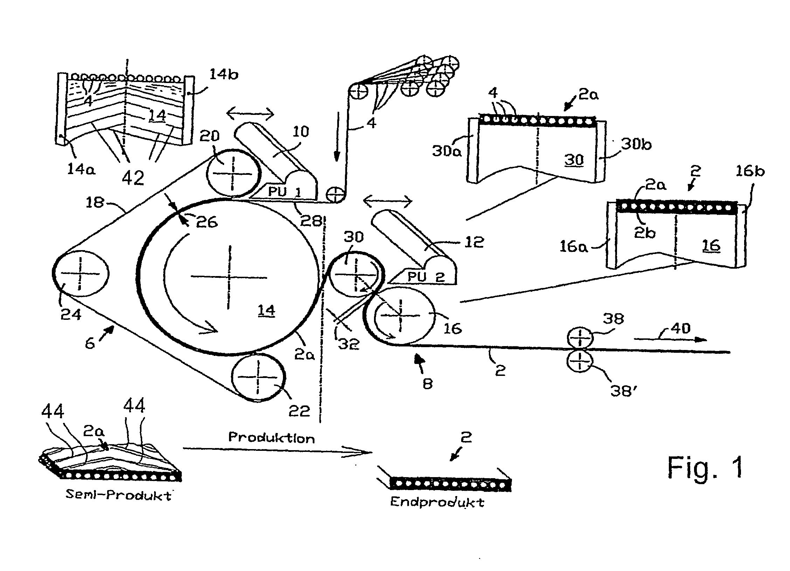

Die in Fig. 1 dargestellte Vorrichtung zur Herstellung von mit Festigkeitsträgern 4 verstärkten Riemen 2 besteht aus zwei "Stationen": "Station 1" 6 und "Station 2" 8. Die "Station 1" 6, die zur Herstellung eines ersten Teilriemens 2a dient, besteht aus einem im Gegenuhrzeigersinn drehbaren Formrad 14 und einem endlosen Formband 18, das einen Teilabschnitt des Formrades 14 umschlingt Die Enden des Teilanschnitts werden von einer oberen 20 und einer unteren Druckrolle 22 in Verbindung mit einer Spannrolle 24 vorgegeben. Zwischen dem Teilabschnitt des Formbandes 18 und dem darunter befindlichen Umfang des Formrades 14 wird ein Formhohlraum 26 gebildet. Mit Hilfe der Spannrolle 24 kann der Andruck des Formbandes 18 auf das Formrad 14 eingestellt werden

Außerdem weist die "Station 1" 6 einen Extruder 10 und eine Drahtzuführung 28 auf.

Zur Herstellung des ersten Teilriemens 2a auf der "Station 1" 6 wird ein plastifizierbarer Kunststoff, z. B. PU, aus dem Extruder 10 auf das temperierte Formrad 14 gegeben. Gleichzeitig wird über die Drahtzuführung 28 die als Festigkeitsträger 4 vorgesehene Verstärkungseinlage zugeführt. Aufgrund der Drahtspannung werden die Drähte 4 auf die Umfangsfläche des Formrades 14 gedrückt, wo sie die Unterseite des zwischen dem Formrad 14 und dem Formband 18 entstehenden ersten Teilriemens 2a bilden.

An die "Station 1" 6 schließt sich unmittelbar eine zweite Station 8 an. Diese "Station 2" 8 besteht im Wesentlichen aus einer Umlenkrolle 30 und einem temperierten Formrad 16. Ähnlich wie die "Station 1" 6 weist auch die "Station 2" 8 einen Extruder 12 auf.

Zur Herstellung eines zweiten Teilriemens 2b bzw. zur Herstellung eines fertigen, aus erstem 2a und zweitem Teilriemen 2b bestehenden Riemens 2 wird der erste Teilriemen 2a unmittelbar nach Verlassen des Formrades 14 um die Umlenkrolle 30 und weiter um das Formrad 16 geschlungen. Mit Hilfe des Extruders 12 wird plastifiziertes KunststoffMaterial auf die mit dem Festigkeitsträger 4 versehene Seite des ersten Teilriemens 2a gegeben und in den zwischen erstem Teilriemen 2a und Formrad 16 gebildeten Zwischenraum (Abstand 32 zwischen Umlenkrolle 30 und zweitem Formrad 16) befördert, wo der zweite Teilriemen 2b entsteht und sich sofort mit dem ersten Teilriemen 2a verbindet. Verglichen mit der "Station 1" 6 übernimmt hier die Verstärkungseinlage 4 des ersten Teilriemens 2a die Funktion eines Formbandes, indem der das Formrad 16 verlassende Riemen 2 über zwei Rollen 38, 38' geführt und mit einem vorgegebenen Zug 40 beaufschlagt wird (Abzugseinrichtung nicht dargestellt). (Die Rolle 30 ist eine reine Umlenkrolle.)

Zur Begrenzung und Führung des ersten Teilriemens 2a weist das (erste) Formrad 14 Bordscheiben 14a, 14b auf.

Zur Begrenzung und Führung des aus erstem 2a und zweitem Teilriemen 2b zusammengefügten Fertigproduktes 2 ist das zweite Formrad 16 ebenfalls mit Bordscheiben 16a, 16b versehen.

Die an der Umlenkrolle 30 eingezeichneten Bordscheiben 30a, 30b können ergänzend vorgesehen werden, sind aber nicht erforderlich.

Im Unterschied zu der in der DE 102 22 015.8 dargestellten Vorrichtung (und dem damit durchzuführenden Riemen-Herstellungsverfahren) ist die Formrad-Oberfläche des ersten Anlagenteils ("Station 1", 6) nicht glatt sondern weist sogenannte "Wickelnasen" 42 auf (siehe Detaildarstellung oben links in Fig. 1). Im vorliegenden Beispiel sind diese Wickelnasen 42 pfeilförmig ausgebildet. Sie können aber auch einfach geradlinig, zickzackförmig oder wellenförmig sein. Mit Hilfe dieser auf der Formradumfangsfläche angeordneten Wickelnasen 42 ergibt sich eine vorgegebene Beabstandung der Zugträgerlage 4 von der Oberfläche des ersten Teilriemens 2a. Außerdem stellen die Formrad-Wickelnasen 42 die "Form" zur Prägung der Oberfläche des ersten Teilriemens 2a dar, indem die Formrad-Wickelnasen 42 zu ihnen kongruente Nuten 44 in der Oberfläche des ersten Teilriemens 2a bilden (siehe Detaildarstellung unten links in Fig. 1).

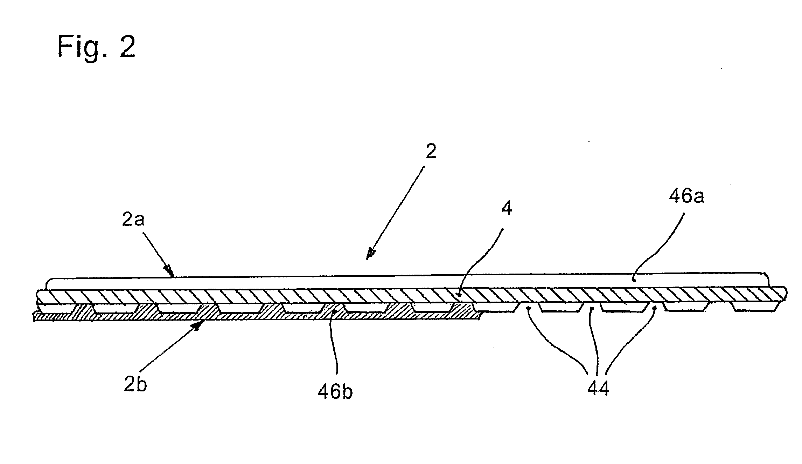

Gleich im Anschluss an die Herstellung des Semiproduktes 2a mittels der "Station 1", 6 erfolgt dann, gewissermaßen "online", mit Hilfe der "Station 2" 8 ein Verfüllen der Nuten 44 zwischen den Rädern 30 und 16. Zum Verfüllen der Nuten 44 wird plastifizierbares, elastomeres Material 46b (siehe Fig. 2) aus dem Extruder 12 verwendet. Dieses Material 46b kann identisch mit dem Material 46a aus dem Extruder 10 sein. (= Material des Semiproduktes 2a). Für besondere Riemenanforderungen (z. b. unterschiedliche Reibbeiwerte, verschiedene Einfärbungen usw.) können die Materialien 46a, 46b auch unterschiedlich sein. Bei der Materialauswahl ist in jedem Fall darauf zu achten, dass die beiden Schichten (die beiden Teilriemen 2a, 2b) gut miteinander verschweißbar sind.

Die Fig. 2 zeigt den Aufbau des erfindungsgemäßen, mit Hilfe der in Fig. 1 dargestellten Vorrichtung hergestellten Flachriemens 2. Dieser Flachriemen (das Endprodukt) 2 setzt sich aus zwei Teilriemen 2a, 2b zusammen. Der erste, in der "Station 1" 6 hergestellte erste Teilriemen (Semiprodukt) 2a weist eine Zugträgerlage 4 auf. Die Corde dieser Zugträgerlage 4 sind mit Hilfe von auf der Formrad-Umfangsfläche befindlichen "Wickelnasen" 42 präzise in einer gemeinsamen Ebene positioniert. Die von den Formrad-Wickelnasen 42 auf der "Unterseite" des ersten Teilriemens 2a erzeugten Nuten 44 werden mit Hilfe des zweiten Teilriemens 2b verschlossen (vergossen). Beide Teilriemen 2a, 2b bilden zusammen das komplette Endprodukt "Flachriemen" 2.

### Bezugszeichenliste

- 2: Riemen, Flachgurt, Fertigprodukt, Endprodukt
- 2a: erster Teilriemen, Halbfabrikat, Semi-Produkt
- 2b: zweiter Teilriemen
- 4: Festigkeitsträger, Verstärkungseinlage, Zugträgerlage, Drähte, Corde
- 6: erste Station ("Station 1")
- 8: zweite Station ("Station 2")
- 10: (erster) Extruder
- 12: (zweiter) Extruder
- 14: (erstes) Formrad
- 14a, 14b: Mittel am ersten Formrad zur seitlichen Führung eines (Teil-)Riemens, Bordscheiben
- 16: (zweites) Formrad
- 16a,16b: Mittel am zweiten Formrad zur seitlichen Führung eines Riemens, Bordscheiben
- 18: endloses Formband
- 20: obere Druckrolle
- 22: untere Druckrolle
- 24: Spannrolle
- 26: Formhohlraum
- 28: Drahtzuführung
- 30: Umlenkrolle
- 30a, 30b: Mittel an der Andruckrolle zur seitlichen Führung eines (Teil-)Riemens, Bordscheiben
- 32: Abstand zwischen Umlenkrolle (30) und zweitem Formrad (16)
- 38, 38': Rolle
- 40: Zug
- 42: Wickelnasen
- 44: Nuten
- 46a, 46b: plastifizierbares, elastomeres Material

## Patentansprüche

1. Aus elastomerem Material (46a, 46b) bestehender Flachriemen (2),
der aus einem ersten Teilriemen (2a) und einem zweiten Teilriemen (2b) aufgebaut ist,
wobei der erste Teilriemen (2a) mit einer aus Corden bestehenden Zugträgerlage (4) verstärkt ist,
- insbesondere zur Verwendung als Antriebsriemen in einer Aufzugsanlage -,
**dadurch gekennzeichnet,**
**dass** der erste Teilriemen (2a) mit Hilfe von Formrad-Wickelnasen (42) mit Nuten (44) versehen ist, und
**dass** der zweite Teilriemen (2b) eine Verfüllung der Nuten (44) des ersten Teilriemens (2a) bildet.

2. Flachriemen nach Anspruch 1,
**dadurch gekennzeichnet,**
**dass** die Zugträgerlage (4) mittig in der neutralen Biegeebene des fertigen Flachriemens (2) positioniert ist

3. Flachriemen nach-Anspruch 1 oder 2,
**dadurch gekennzeichnet,**
**dass** erster (2a) und zweiter Teilriemen (2b) aus unterschiedlichem Elastomermaterial (46a, 46b) bestehen.

4. Flachriemen nach einem der Ansprüche 1 bis 3,
**dadurch gekennzeichnet,**
**dass** mindestens eine der beiden Oberflächen des Riemens (2) beschichtet ist.

5. Flachriemen nach einem der Ansprüche 1 bis 4,
**dadurch gekennzeichnet,**
**dass** mindestens eine der beiden Riemenoberflächen mit einem Längs- oder Querprofil versehen ist.

6. Verfahren zur Herstellung eines Riemens (2) aus zwei Teilriemen (2a, 2b) aus plastifizierbarem Material (46a, 46b),
wobei zur Herstellung des ersten Teilriemens (2a) zunächst einzelne, eine Zugträgerlage bildende Corde (4) auf ein mit Wickelnasen (42) versehenes Formrad (14) gegeben werden, und wobei dann der plastifizierbare Werkstoff (46a) für den ersten Teilriemen (2a) auf das Formrad (14) aufgetragen und mit den Zugträgern (4) verbunden wird, und
wobei in einer zweiten Verfahrensstufe der zweite Teilriemen (2b) angeformt wird,
**dadurch gekennzeichnet,**
**dass** die mit der ersten Verfahrensstufe auf dem ersten Teilriemen (2a) erzeugten Nuten (44) in der zweiten Verfahrensstufe verfüllt werden.

7. Vorrichtung zur Herstellung eines aus plastifizierbarem Material (46a, 46b) bestehenden Riemens (2) - gemäß einem der Ansprüche 1 bis 5 -,
mit einer ersten Station ("Station 1", 6) zur Herstellung eines ersten, mit Festigkeitsträgern (4) versehenen Teilriemens (2a),
und mit einer zweiten Station ("Station 2", 8) zur Herstellung eines zweiten Teilriemens (2b) und zur Ausformung des zweiten Teilriemens (2b) an den ersten Teilriemen (2a),
wobei die erste (6) und die zweite Station (8) jeweils einen Extruder (10, 12) und ein Formrad (14, 16) aufweisen,
und wobei die erste Station (6) außerdem mit einem Formband (18), das mit Hilfe einer oberen Druckrolle (20), einer unteren Druckrolle (22) und einer Spannrolle (24) einen Formhohlraum (26) längs eines Teilumfangs des Formrades (14) bildet, und
eine Drahtzuführung (28) aufweist,
**dadurch gekennzeichnet,**
**dass** das Formrad (14) der ersten Station (6) Wickelnasen (42) zur Erzeugung von Nuten (44) auf dem ersten, mit Festigkeitsträgern (4) versehenen Teilriemen (2a) aufweist.

8. Vorrichtung nach Anspruch 7,
**dadurch gekennzeichnet,**
**dass** die auf dem Umfang des Formrades (14) angeordneten Wickelnasen (42) unterschiedlich voneinander beabstandet sind.

9. Vorrichtung nach Anspruch 7 oder 8,
**dadurch gekennzeichnet,**
**dass** die Richtung der Wickelnasen (42) schräg zur Laufrichtung und/oder unter einem Winkel zueinander angeordnet sind.

10. Vorrichtung nach einem der Ansprüche 7 bis 9,
**dadurch gekennzeichnet,**
**dass** die Wickelnasen (42) gebogen, V-, zickzack- oder wellenförmig ausgebildet sind.

## Claims

1. Flat belt (2), which consists of elastomeric material (46a, 46b) and is made up of a first partial belt (2a) and a second partial belt (2b), the first partial belt (2a) being reinforced with a tensionable layer (4) consisting of cords, in particular for use as a drive belt in an elevator system, **characterized in that** the first partial belt (2a) is provided with grooves (44) with the aid of winding noses (42) of a moulding wheel, and **in that** the second partial belt (2b) forms a filling of the grooves (44) of the first partial belt (2a).

2. Flat belt according to Claim 1, **characterized in that** the tensionable layer (4) is positioned centrally in the neutral bending plane of the finished flat belt (2).

3. Flat belt according to Claim 1 or 2, **characterized in that** the first partial belt (2a) and the second partial belt (2b) consist of different elastomer material (46a, 46b).

4. Flat belt according to one of Claims 1 to 3, **characterized in that** at least one of the two surfaces of the belt (2) is coated.

5. Flat belt according to one of Claims 1 to 4, **characterized in that** at least one of the two belt surfaces is provided with a longitudinal or transverse profile.

6. Method for producing a belt (2) comprising two partial belts (2a, 2b) of plastifiable material (46a, 46b), wherein, to produce the first partial belt (2a), firstly individual cords (4), forming a tensionable layer, are placed onto a moulding wheel (14) provided with winding noses (42), and wherein the plastifiable material (46a) for the first partial belt (2a) is then applied to the moulding wheel (14) and bonded with the tensile load-bearing elements (4), and wherein, in a second method stage, the second partial belt (2b) is moulded on, **characterized in that** the grooves (44) produced on the first partial belt (2a) by the first method stage are filled in the second method stage.

7. Apparatus for producing a belt (2) consisting of a plastifiable material (46a, 46b) - according to one of Claims 1 to 5 -, with a first station ("station 1", 6) for producing a first partial belt (2a) that is provided with reinforcing elements (4), and with a second station ("station 2", 8) for producing a second partial belt (2b) and for moulding the second partial belt (2b) onto the first partial belt (2a), wherein the first station (6) and the second station (8) respectively have an extruder (10, 12) and a moulding wheel (14, 16), and wherein the first station (6) also has a moulding band (18), which, with the aid of an upper pressure roller (20), a lower pressure roller (22) and a tensioning roller (24), forms a mould cavity (26) along a partial circumference of the moulding wheel (14), and has a wire feed (28), **characterized in that** the moulding wheel (14) of the first station (6) has winding noses (42) for producing grooves (44) on the first partial belt (2a) that is provided with reinforcing elements (4).

8. Apparatus according to Claim 7, **characterized in that** the winding noses (42) arranged on the circumference of the moulding wheel (14) are differently spaced apart from one another.

9. Apparatus according to Claim 7 or 8, **characterized in that** the direction of the winding noses (42) is oblique to the running direction and/or they are arranged at an angle in relation to one another.

10. Apparatus according to one of Claims 7 to 9, **characterized in that** the winding noses (42) are formed in an arcuate, V-shaped, zigzag-shaped or wave-shaped manner.

## Revendications

1. Courroie plate (2) en matériau élastomère (46a, 46b), qui est constituée d'une première courroie partielle (2a) et d'une deuxième courroie partielle (2b), dans laquelle la première courroie partielle (2a) est renforcée avec une couche de tirants (4) composée de câbles, destinée en particulier à être utilisée comme courroie d'entraînement dans une installation de levage, **caractérisée en ce que** la première courroie partielle (2a) est pourvue de rainures (44) à l'aide d'ergots d'enroulement d'une roue de formage, et **en ce que** la deuxième courroie partielle (2b) forme un remplissage des rainures (44) de la première courroie partielle (2a).

2. Courroie plate selon la revendication 1, **caractérisée en ce que** la couche de tirants (4) est positionnée au milieu, dans le plan de flexion neutre de la courroie plate terminée (2).

3. Courroie plate selon la revendication 1 ou 2, **caractérisée en ce que** la première (2a) et la deuxième (2b) courroies partielles se composent de matériaux élastomères différents (46a, 46b).

4. Courroie plate selon l'une quelconque des revendications 1 à 3, **caractérisée en ce qu'**au moins une des deux surfaces de la courroie (2) est revêtue.

5. Courroie plate selon l'une quelconque des revendications 1 à 4, **caractérisée en ce qu'**au moins une des deux surfaces de la courroie est pourvue d'un profil longitudinal ou transversal.

6. Procédé de fabrication d'une courroie (2) composée de deux courroies partielles (2a, 2b) en matériau plastifiable (46a, 46b), dans lequel on pose d'abord des câbles individuels (4) formant une couche de tirants sur une roue de formage (14) pourvue d'ergots d'enroulement (42) pour produire une première courroie partielle (2a), et dans lequel on dépose ensuite la matière plastifiable (46a) pour la première courroie partielle (2a) sur la roue de formage (14) et on l'unit aux tirants (4), et dans lequel on forme la deuxième courroie partielle (2b) dans une seconde étape du procédé, **caractérisé en ce que** les rainures (44) produites sur la première courroie partielle (2a) au cours de la première étape du procédé sont remplies au cours de la seconde étape du procédé.

7. Dispositif de fabrication d'une courroie (2) composée d'une matière plastifiable (46a, 46b) - selon l'une quelconque des revendications 1 à 5 -,
avec une première station ("station 1", 6) pour la fabrication d'une première courroie partielle (2a) pourvue de tirants de résistance (4),
et avec une deuxième station ("station 2", 8) pour la fabrication d'une deuxième courroie partielle (2b) et pour la conformation de la deuxième courroie partielle (2b) sur la première courroie partielle (2a),
dans lequel la première (6) et la deuxième (8) stations comprennent chacune une extrudeuse (10, 12) et une roue de formage (14, 16),
et dans lequel la première station (6) comprend par ailleurs une bande de formage (18), qui forme un espace de formage creux (26) le long d'une partie de la périphérie de la roue de formage (14) à l'aide d'un rouleau de pression supérieur (20), d'un rouleau de pression inférieur (22) et d'un rouleau de tension (24), et un système d'entrée de fils (28),
**caractérisé en ce que** la roue de formage (14) de la première station (6) présente des ergots d'enroulement (42) pour produire des rainures (44) sur la première courroie partielle (2a) pourvue de tirants de résistance (4).

8. Dispositif selon la revendication 7, **caractérisé en ce que** les ergots d'enroulement (42) disposés sur la périphérie de la roue de formage (14) sont écartés différemment les uns des autres.

9. Dispositif selon la revendication. 7 ou 8, **caractérisé en ce que** la direction des ergots d'enroulement (42) est oblique par rapport à la direction de défilement et/ou les ergots d'enroulement forment un angle entre eux.

10. Dispositif selon l'une quelconque des revendications 7 à 9, **caractérisé en ce que** les ergots d'enroulement (42) sont courbes, en forme de V, de zigzag ou d'ondulations.
